# EUROPÄISCHE PATENTANMELDUNG

(11) **EP 0 571 752 A1**
(43) Veröffentlichungstag der Anmeldung: **01.12.1993**
(21) Anmeldenummer: 93106211.1
(22) Anmeldetag: 16.04.1993
(51) Int. Cl.: F16D 65/12, F16D 59/02, F16D 63/00

(54) **Bremsscheibe insbesondere für einen Elektromotor**

(30) Priorität: 27.05.1992 DE 4217548
(71) Anmelder: SEW-EURODRIVE GMBH & CO., D-76642 Bruchsal (DE)
(72) Erfinder: Fischer, Horst, W-7526 Ubstadt-Weiher 3 (DE)
(74) Vertreter: Dipl.-Ing. Heiner Lichti Dipl.-Phys. Dr.rer.nat. Jost Lempert Dipl.-Ing. Hartmut Lasch

(57) **Zusammenfassung**

Um bei auf den Antriebsachsen eines Motors bzw. mit solchen fest verbundenen Naben drehfest, aber axial beweglich aufsitzenden Bremsscheiben mit fertigungstechnisch erforderlichen Toleranzen verbundene Rasselgeräusche unter Beibehaltung der axialen Beweglichkeit der Bremsscheibe zu vermeiden, sieht die Erfindung vor, daß eine solche Bremsscheibe, insbesondere für einen Elektromotor, gekennzeichnet ist durch zwei parallel nebeneinander angeordnete Einzelscheiben (2), die senkrecht zu ihren Achsen (a) zum Versatz derselben gegeneinander verspannt sind, wodurch das durch die Toleranzen gegebene Zahnflankenspiel elastisch ausgeglichen wird.

## Beschreibung

Die Erfindung betrifft eine Bremsscheibe, insbesondere für einen Elektromotor.

Derartige Elektromotoren weisen eine elektromagnetische Bremse auf. Teil der elektromagnetischen Bremse ist eine auf einer mit dem Motor verbundenen Welle mit dieser drehbar oder frei umlaufbar, in der Regel formschlüssig aufsitzende, aber axial bewegliche Bremsscheibe. Die Bremse weist weiterhin eine mit einem Gehäuse drehfest, aber ebenfalls axial bewegliche Ankerscheibe auf, die unter Federwirkung zum Bremsen gegen die Bremsscheibe gedrückt wird und diese gegen eine auf der Ankerscheibe abgewandten Seite der Bremsscheibe angeordnete gehäusefeste Anlagefläche drückt. Durch einen Elektromagneten mit einem Magnetkörper und einer Erregerwicklung kann die Ankerscheibe von der Bremsscheibe gelüftet werden. Die Bremsscheibe und/oder Ankerscheibe und Anlagefläche sind mit Bremsbelägen höheren Reibkoeffizienten beschichtet oder versehen. Die formschlüssige, aber axiale Verbindung der Bremsscheibe zur Achse oder Nabe des Motors wird in der Regel durch Zahnnaben- oder Polygonverbindungen gelöst. Hierbei sind fertigungsbedingt Toleranzen erforderlich, die zu einem Spiel zwischen den Zahnflanken von Bremsscheiben und Nabe führen. Dieses Flankenspiel führt bei laufendem Motor zu einem Rasseln der auf der Nabe lose sitzenden Bremsscheibe. Ursache sind hierfür pulsierende Drehmomente, die vom Motor oder von außen auf die Bremsscheibe übertragen werden und zum Schlagen der Zahnflanken gegeneinander führen.

Der Erfindung liegt die Aufgabe zugrunde, unter Vermeidung der vorgenannten Nachteile eine Bremsscheibe zu schaffen, bei der unter Beibehaltung der Axialbeweglichkeit der Bremsscheibe auf einer mit einer Motorwelle verbundenen Nabe das erwähnte Rasseln unterdrückt, zumindestens aber wesentlich vermindet wird.

Erfindungsgemäß wird die genannte Aufgabe bei einer Bremsscheibe der eingangs genannten Art gelöst durch zwei Einzelscheiben, die senkrecht zu ihren Achsen zum Versatz derselben elastisch gegeneinander verspannt sind.

Durch die erfindungsgemäße Verspannung zweier Einzelscheiben senkrecht zu deren Achsen gegeneinander wird das Zahnspiel der Zahnkupplungen zwischen Bremsscheibe und Nabe bzw. Welle beseitigt. Die Einzelscheiben werden diametral zur Achse gegeneinandergezogen, wodurch bewirkt wird, daß stets von jeder Einzelscheibe eine Flankenseite an den Nabenflanken anliegt, was zu einem geräuschfreien Lauf der Bremsscheibe führt, ohne daß die Verschiebbarkeit der Bremse auf der Nabe beeinträchtigt ist.

Gemäß einer bevorzugten Ausgestaltung ist vorgesehen, daß Angriffspunkte für elastische Spannmittel der Scheiben in Richtung der Wirkungskraft der Spannmittel zueinander versetzt angeordnet sind, wobei insbesondere die Scheiben beidseits diametral zur Achse gegenüberliegend mit Spannmitteln versehen sind. In diesem Falle kann in Weiterbildung vorgesehen sein, daß die Einzelscheiben identisch ausgebildet, aber zueinander um 180° um einen Durchmesser senkrecht zur Spannrichtung der Spannmittel verdreht zueinander nebeneinander angeordnet sind.

Um die Spannmittel ohne zusätzlichen Platzbedarf unterbringen zu können, sieht eine weitere bevorzugte Ausgestaltung vor, daß die Scheiben Ausnehmungen zur Aufnahme eines Hauptkörpers der Spannmittel aufweisen. Die Angriffspunkte für die Spannmittel können in bevorzugter Weise derart ausgebildet sein, daß die Scheiben Ösen an Angriffspunkte zur Aufnahme von Befestigungsmitteln der Spannmittel aufweisen. Die Spannmittel selbst können als Zugfedern ausgebildet sein, wobei sich insbesondere Schraubenfedern anbieten.

Durch die unsymmetrische Anordnung der Angriffspunkte für Angriffselemente, insbesondere Ösen, für die Angriffselemente der Spannmittel, also Befestigungshaken der Zugfedern, werden in der genannten Weise um 180° verdrehten Gegeneinanderlegen der beiden Einzelscheiben Lochleibungsüberstände bewirkt, an denen die Zugfedern angreifen und derart die Einzelscheiben senkrecht zu ihren Achsen gegeneinander verschieben können, wodurch die Entfernung des Flankenspiels der Verzahnung bewirkt wird.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnung im einzelnen erläutert ist. Dabei zeigt:

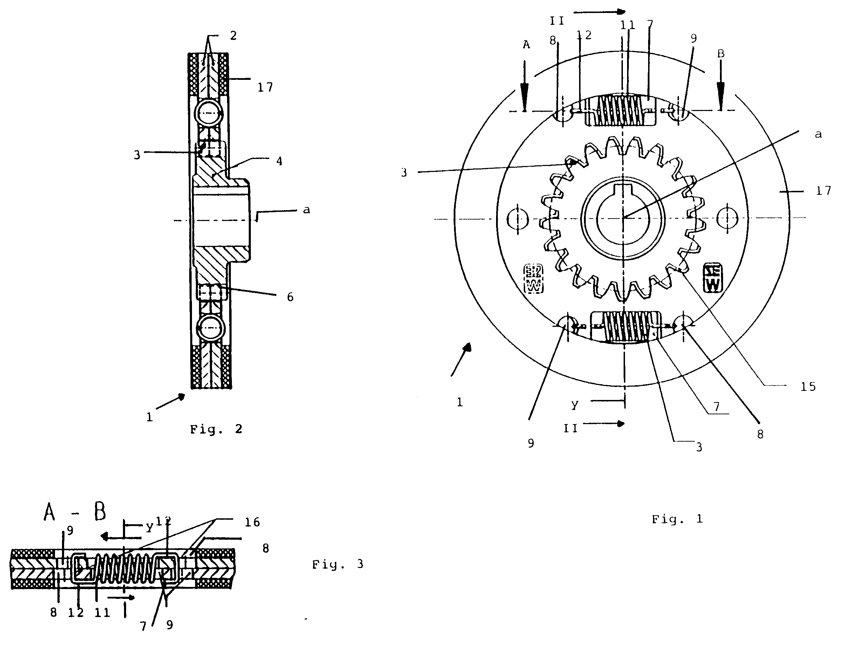

- Figur 1: eine Seitenansicht einer bevorzugten Ausgestaltung der erfindungsgemäßen Bremsscheibe;
- Figur 2: einen Schnitt entlang II-II der Figur 1; und
- Figur 3: einen Schnitt entsprechend A-B der Figur 1.

Die erfindungsgemäße Bremsscheibe 1 weist zwei Einzelscheiben 2 auf. Die Einzelscheiben 2 haben einen Innenverzahnung 3, mit der sie formschlüssig, aber axial verschiebbar auf einer fest mit der Antriebswelle eines Motors verbindbaren Nabe 4, die ihrerseits eine Außenverzahnung 6 aufweist, aufsitzen. Diametral gegenüberliegend zur Achse a sind in den Einzelscheiben 2 jeweils eine Ausnehmung 7 und beidseits deren Enden Ösen 8, 9 ausgebildet. In den Ausnehmungen 7 befinden sich die Körper von elastischen Spannmitteln, die in der dargestellten Ausführungsform Schrauben-Zugfedern 11 sind. Die Zugfedern 11 sind mit hakenformigen Enden 12 in den Ösen 8, 9 festgelegt. Sowohl die Ausnehmungen 7 als auch die Ösen 8, 9 sind in Richtung ihrer Flucht und damit der Wirkungsrichtung der Federn 11 relativ zu einem zu diesen Richtungen senkrecht verlaufenden Durchmesser Y der Scheiben 2 jeweils in entgegengesetzter Richtung (in Richtung des gleichen Drehsinnes) versetzt ausgebildet. So weist die Öse 8 bzw. deren Mittelachse einen größeren Abstand von der Achse Y auf als die Öse 9. Die beiden Einzelscheiben sind um 180° um die Achse Y zueinander versetzt angeordnet, so daß jeweils die Öse 8 der einen Scheibe unmittelbar benachbart der Öse 9 der anderen Scheibe angeordnet ist, so daß aufgrund des größeren Abstandes der Ösen 8 von der Achse Y sich ein Lochleibungsabstand (bei 16) ergibt. Hierdurch können die Federn 11 senkrecht zum Durchmesser 8 bzw. in ihrer Wirkungsrichtung gegeneinander zum Ausgleich des Zahnflankenspiels mit den Zähnen 6 der Nabe 4 verschieben.

In einem Umfangsbereich sind die Einzelscheiben 2 auf ihrer Außenseite mit Bremsbelägen 17 versehen.

## Patentansprüche

1. Bremsscheibe, insbesondere für einen Elektromotor, gekennzeichnet durch zwei Einzelscheiben (2), die senkrecht zu ihren Achsen (a) zum Versatz derselben elastisch gegeneinander verspannt sind.

2. Bremsscheibe nach Anspruch 1, dadurch gekennzeichnet, daß Angriffspunkte (Ösen 8, 9) für elastische Spannmittel (11) der Scheiben (2) in Richtung der Wirkungskraft der Spannmittel (11) zueinander versetzt angeordnet sind.

3. Bremsscheibe nach Anspruch 1 oder 2, dadurch gekennzeichnet, daß die Scheiben (2) beidseits diametral zur Achse (a) gegenüberliegend mit Spannmitteln (11) versehen sind.

4. Bremsscheibe nach Anspruch 3, dadurch gekennzeichnet, daß die Einzelscheiben (2) identisch ausgebildet, aber zueinander um 180° um einen Durchmesser senkrecht zur Spannrichtung der Spannmittel (11) verdreht zueinander nebeneinander angeordnet sind.

5. Bremsscheibe nach einem der vorangehenden Ansprüche, dadurch gekennzeichnet, daß die Scheiben (2) Ausnehmungen (7) zur Aufnahme eines Hauptkörpers der Spannmittel (11) aufweisen.

6. Bremsscheibe nach einem der vorangehenden Ansprüche, dadurch gekennzeichnet, daß die Scheiben (2) Ösen (8, 9) an Angriffspunkte zur Aufnahme von Befestigungsmitteln (Haken 12) der Spannmittel (11) aufweisen.

7. Bremsscheibe nach einem der vorangehenden Ansprüche, dadurch gekennzeichnet, daß die Spannmittel (11) Zugfedern, insbesondere Schraubenfedern, sind.
